# EUROPÄISCHE PATENTSCHRIFT

(11) **EP 2 290 792 B1**
(45) Veröffentlichungstag und Bekanntmachung des Hinweises auf die Patenterteilung: **20.08.2014**
(21) Anmeldenummer: 10008281.7
(22) Anmeldetag: 09.08.2010
(51) Int. Cl.: H02K 21/18, H02K 29/00, H02K 21/14

(54) **Magnet-Turbine**
Magnetic turbine
Turbine à aimant

(30) Priorität: 26.08.2009 DE 102009038933
(43) Veröffentlichungstag der Anmeldung: 02.03.2011
(73) Patentinhaber: Kutzke, Arthur, 18435 Stralsund (DE)
(72) Erfinder: Kutzke, Arthur, 18435 Stralsund (DE)

(56) Entgegenhaltungen:
- EP-A2- 2 249 466
- US-A1- 2004 251 759

## Beschreibung

Elektromagnetische Antriebe mit Scheibenförmigen Rotoren sind aus Dokumenten US 2004/251759 A1 und EP 2 249 466 A2 bekannt.

Der Motor besteht im Wesentlichen aus zwei Komponenten: Mechanik und Elektronik. Drei verschiedene Energieformen (rotierende Energie der Masse, elektrische Energie und magnetische Energie) werden in diesem Motor vereint und bilden einen leistungsstarken Antrieb. Bei 16 Dauermagneten und 16 Magnetspulen (siehe Seitenansicht der Zeichnung) ergeben sich pro Rotor und Umdrehung 1024 Arbeitstakte.

Auf einer gelagerten Welle können eine oder mehre Rotoren montiert werden und drehen sich mit ihr in einem Gehäuse. Auf dem Kranz des Rotors verschraub befinden sich mehrere Dauermagnete in Hufeisenform mit wechselnder Polung, die sich also mit den Polen Nord- Süd, Süd- Nord usw. abwechseln (siehe Zeichnung).

Über den Rotoren, waagerecht in Achsrichtung der Welle montiert, sind mehrere Spulen mit Eisenkern, ebenfalls in Hufeisenform, angebracht. Es stehen sich die Pole, getrennt durch einen Luftspalt, direkt gegenüber. Damit wird erreicht, dass bei Zündung des Elektromagneten keine Magnet-Pol-Kraft ins Leere geht, sondern immer einen Gegenpart findet.

Die magnetische Energie wird hier optimal genutzt. Es findet nur ein geringer Energieverlust statt. Es ist ein geschlossener magnetischer Kreislauf; in ihm Wirken die Magnete gegeneinander anziehend oder abstoßend und halten den Rotor dadurch in Drehung. Befinden sich zur Leistungssteigerung zwei oder mehrere Rotoren auf der Welle, so müssen die Spulen versetzt zueinander montiert werden.

Nach dem Starten des Motors werden die Spulen/Elektromagnete durch einen Batteriestrom aktiviert und üben auf die Dauermagnete eine anziehende oder abstoßende Magnetkraft aus und somit als Drehkraft auf die Rotoren. Stehen sich Dauermagnete und Elektromagnete versetzt gegenüber (Nord-Süd, Süd-Nord), so wirken die Anziehungskräfte der Magnete (1. Arbeitstakt).

Stehen sich Dauermagnete und Elektromagnete gegenüber, so wird die Spule/ Elektromagnet durch eine Steuerung umgepolt, d.h. Nord-Nord, Süd-Süd, und Übt auf die Dauermagnete eine abstoßende Wirkung aus (2. Arbeitstakt). Die Umpolung ist ein Schaltvorgang, der eine gewisse Zeit benötigt. Um eine Blockade zu vermeiden, sollte die alte Polung vor dem oberen Scheitelpunkt abgeschaltet und die neue Polung nach dem oberen Scheitelpunkt eingeschaltet werden. Das rechtzeitige Umpolen kann über einen Kommutator oder einer elektronischen Steuerung erreicht werden.

Die rotierende Energie der Masse (Rotor) sorgt für die Einhaltung der Drehrichtung des Motors, glättet die Stöße, und die Elektromagnete üben auf das nun folgende Paar Dauermagnete eine anziehende Wirkung aus, da jeder zweite Elektromagnet ebenfalls eine umgekehrte Polung hat. Stößt der eine Elektromagnet ab, so zieht der nächste Elektromagnet an.

Durch die abwechselnde Anordnung der Polarität von Dauer- und Elektromagneten, also N-S und S-N und N-S usw. haben wir es hier mit einer Doppelwirkung der Magnete zu tun. Während die Magnetkraft der Elektromagnete auf den unter sich wegdrehenden Dauermagneten (N-N und S-S) abstoßend wirkt, zieht sie gleichzeitig den folgenden Dauermagneten mit ansteigender Kraft (N-S und S-N) an.

Die abstoßenden Kräfte schwinden mit der Entfernung, während die anziehenden Kräfte wachsen (Wirkung auf die Dauermagnete). So wiederholen sich die Vorgänge ständig, halten dadurch den Rotor in Bewegung und erhöhen die Drehzahl.

Die Kraftwirkung der Magnete erfolgt immer zweipolig, d.h. Nord-Süd und Süd-Nord für anziehend und Nord-Nord und Süd-Süd für abstoßend. Eine Drehzahlregelung erfolgt durch das Abschalten einzelner Spulen/Elektromagnete, und der Stromverbrauch wird gesenkt.

Um die Betriebsdauer der Batterie zu erhöhen, könnte diese von Solarzellen gespeist werden. Beim Durchlaufen der Spulen durch die Dauermagnete wird ein Induktionsstrom erzeugt, der ebenfalls der Batterie zugeführt werden könnte. Bei laufendem Motor liefert auch eine Lichtmaschine Strom.

Zusammenfassend nochmals die wichtigsten Merkmale hervorgehoben.

Konstruktion und Funktionsweise des Magnetmotors ist so angelegt, dass die anziehende und abstoßende Kraftwirkung der Magnete stets gleichzeitig doppelt und zweipolig wirkt.

## Patentansprüche

1. Magnetmotor mit elektromagnetischem Antrieb, bestehend aus einem Läuferkern
mit Dauermagneten auf einer gelagerten Antriebswelle und einem Ständer mit Magnetspulen die mit, einer Steuereinrichtung für den wechselnden Stromfluss der Magnetspulen, von den Dauermagneten durch einen Luftspalt getrennt sind welche Steuereinrichtung die Magnetspulen so steuert, dass die magnetische Wirkung von anziehend auf abstoßend, während der Rotation rechtzeitig umschaltet wobei auf dem Kranz des Rotors (3) in einer Einsenkung, Dauermagnete (2) in Hufeisenform mit wechselnder Polung montiert sind dadurch gekkenzeichnet dass die hufeinsenförmigen Magneten mit Schrauben auf dem kranz des Rotors verschrauben sind.

2. Magnetmotor nach Anspruch 1, **dadurch gekennzeichnet,**
**dass** die rotierende Energie der Rotoren für einen gleichmäßigen Lauf sorgt und eventuell auftretende Stöße der Arbeitstakte glättet.

3. Magnetmotor nach Anspruch 1 bis 2, **dadurch gekennzeichnet, dass** zur Erhöhung der Leistung mehrere Rotoren (3) auf der Antriebswelle (4) angebracht sind.

4. Magnetmotor nach Anspruch 1 bis 3, **dadurch gekennzeichnet, dass** waagerecht in Achsrichtung der Welle (4) über den Dauermagneten (2) Magnetepulen (1) am Ständer befestigt sind und sich die Pole, getrennt durch den Luftspalt, direkt gegenüberstehen.

5. Magnetmotor nach Anspruch 1 bis 4, **dadurch gekennzeichnet, dass** die Eisenkerne der Magnetepulen (1) abgewinkelt sind und die Kraftwirkung der Magnete immer gleichzeitig zweipolig im geschlossenen Magnetkreis erfolgt, d.h. N-S und S-N für anziehend und N-N und S-S für abstoßend.

6. Magnetmotor nach Anspruch 1 bis 5, **dadurch gekennzeichnet, dass** die Magnetspulen (1) eine entsprechende periodisch wechselnde Polung zu den Dauermagneten (2) haben. Befinden sich die Dauermagnete (2) im Drehsinn vor den Magnetspulen (1), so sind die Magnetspulen auf Zug geschaltet. Während der Rotation wird die Polarität der Magnetspulen im geeigneten Zeitpunkt von anziehend auf abstoßend umgeschaltet und die Dauermagnete befinden sich im Drehsinn, also nach dem oberen Scheitelpunkt.

7. Magnetmotor nach Anspruch 1 bis 6, **dadurch gekennzeichnet, dass** die Magnetspule (1) eine Doppelwirkung ausübt. Nach dem Umschalten von Zug auf Druck übt die Magnetspule auf die sich wegdrehenden Dauermagneten (2) einen Druck aus, während sie gleichzeitig die folgenden Dauermagnete (2) mit steigender Kraft anzieht. Diese Doppelwirkung beruht auf der wechselnden Anordnung der Polarität der Dauermagnete.

8. Magnetmotor nach Anspruch 1 bis 7, **dadurch gekennzeichnet, dass** bei mehreren Rotoren (3) die Magnetspulen 1 am Ständer versetzt angeordnet sind.

9. Magnetmotor nach Anspruch 1 bis 8, **dadurch gekennzeichnet, dass** die Drehzahlsteuerung durch Abschalten einzelner Magnetspulen (1) erfolgt.

10. Magnetmotor nach Anspruch 1 bis 9, **dadurch gekennzeichnet, dass** die Energie für die Magnetspulen (1) einer Batterie entnommen wird.

11. Magnetmotor nach Anspruch 1 bis 10, **dadurch gekennzeichnet, dass** die Energie zur Verlängerung der Betriebsdauer der Batterie, Solarzellen und einem Generator entnommen werden kann.

## Claims

1. Magnet motor with electro-magnetic drive consisting of a rotor shaft with permanent magnets on a supported shaft and a stator with magnet coils. It is **characterised by** a control device for the alternating current flow of the magnet coils (these being separated from the permanent magnets by an air gap) which during rotation timely switches the magnetic force from attractive (north-south) to opposing (north-north). (Electronic control through microprocessors and semiconductor switches)

2. Magnet motor according to claim 1 **characterised by** a smooth cycle via the rotating energy of the rotors. This results in a smooth cycle. On the rotor's rim (3), in a sinking, permanent magnets (2) in horseshoe form, and in alternating polarity, are fixed with screws.

3. Magnet motor according to claims 1 and 2 **characterised by** a power enhancement through the mount of several rotors (3) on the shaft (4).

4. Magnet motor according to claims 1 to 3 **characterised by** the mount of magnet coils (1) on the stator, this horizontal to axial direction of the shaft (4), above the permanent magnets (2), and directly facing each other, separated by the air gap.

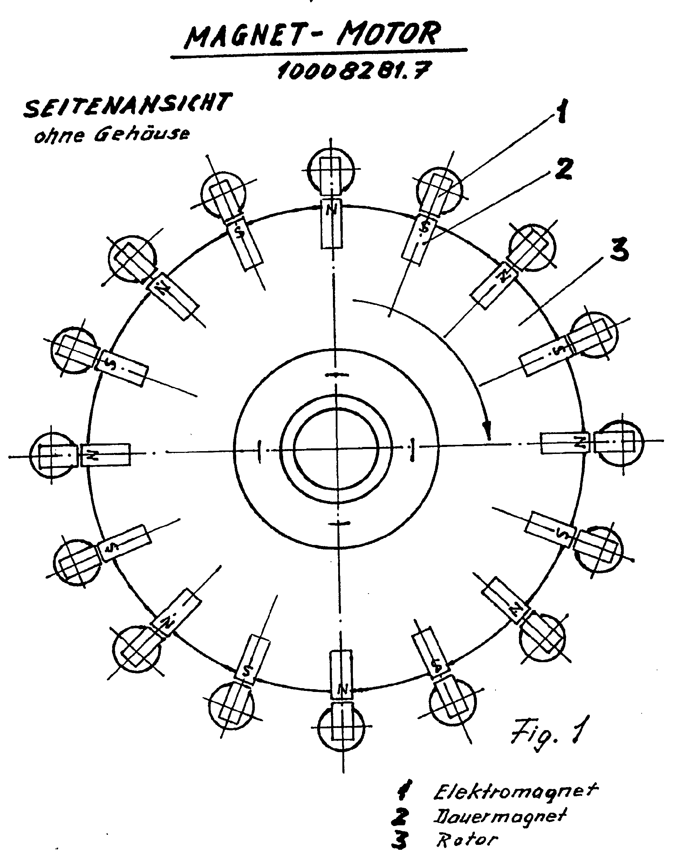

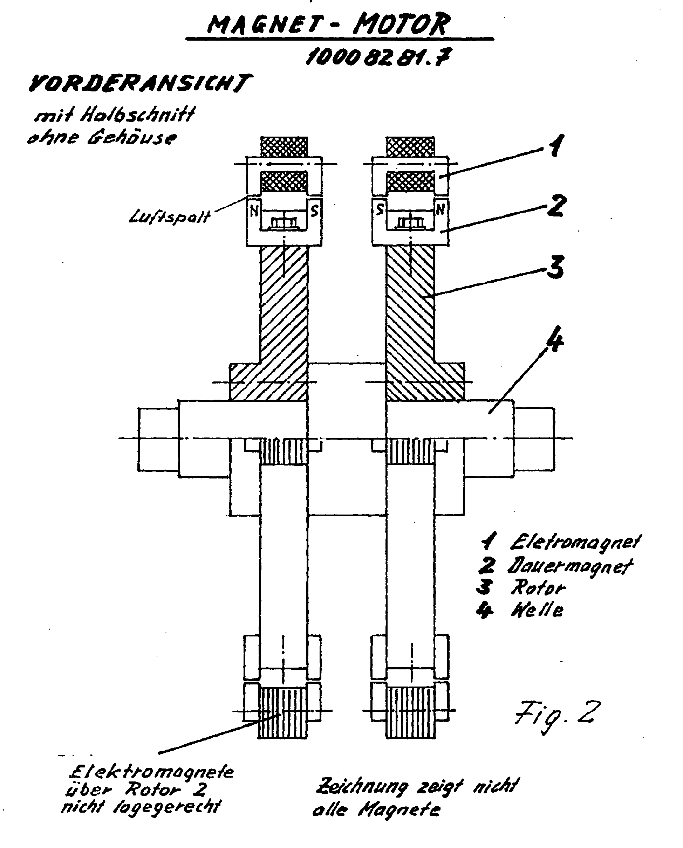

5. Magnet motor according to claims 1 to 4 **characterised by** the magnet coils' iron cores (1) being angled and the action of force being always two-pole in the closed magnetic circuit (i.e. north-south and south-north for attractive, north-north and south-south for opposing) (ref. figure 2).

6. Magnet motor according to claims 1 to 5 **characterised by** the magnet coils' (1) periodically alternating polarity towards the permanent magnets (2). When the permanent magnets (2) are in the direction of rotation in front of the magnet coil (1), the latter exerts a drag on these. During rotation the polarity of the magnet coil is switched at the adequate moment. The permanent magnets are in the direction of rotation, i.e. after the upper apex.

7. Magnet motor according to claims 1 to 6 **characterised by** the exertion of the magnet coil's (1) double action. After switching the polarity it exerts a thrust on the by-passing pair of permanent magnets (2), while attracting the following pair of permanent magnets (2). This double action is based on the alternating arrangement of the permanent magnets' polarity.

8. Magnet motor according to claims 1 to 7 **characterised by** the magnet coils' (1) being arranged in offset on the stator in the case of several rotors (3).

9. Magnet motor according to claims 1 to 8 **characterised by** the controlling of rotational speed through switching off individual magnet coils (1).

10. Magnet motor according to claims 1 to 9 **characterised by** taking the energy for the magnet coils (1) from a battery.

11. Magnet motor according to claims 1 to 10 **characterised by** taking the energy from solar cells and a generator in order to prolong the battery's service life.

## Revendications

1. Moteur magnétique doté d'un entraînement électromagnétique, comprenant un noyau de rotor doté d'aimants permanents sur un arbre d'entraînement monté sur rotation et d'un support doté de bobines magnétiques qui sont séparées des aimants permanents via un entrefer par un dispositif de commande pour le flux de courant à variation des bobines magnétiques et qui commande les bobines magnétiques de manière à commuter au moment opportun un effet magnétique repoussant en effet magnétique attirant pendant la rotation (commande électronique avec un microprocesseur et des commutateurs semi-conducteurs).

2. Moteur magnétique selon la revendication 1, **caractérisé en ce que** l'énergie rotative des rotors garantit un fonctionnement régulier et absorbe éventuellement les chocs dus aux cycles de fonctionnement.
Les aimants permanents (2) en forme de fer à cheval à polarité alternée se trouvent sur la couronne de rotor (3), dans un creux et sont fixés par des vis.

3. Moteur magnétique selon les revendications 1 et 2, **caractérisé par**, plusieurs rotors (3) montés sur l'arbre d'entraînement (4) pour l'augmentation de la puissance

4. Moteur magnétique selon les revendications 1 à 3, **caractérisé en ce que** les bobines magnétiques (1) sont fixées sur le support à l'horizontale dans la direction de l'axe de l'arbre (4) sur les aimants permanents (2) et que les pôles, séparées par l'entrefer, sont directement face à face.

5. Moteur magnétique selon les revendications 1 à 4, **caractérisé en ce que** les noyaux en fer des bobines magnétiques (1) sont déroulés et l'action de force des aimants est toujours bipolaire dans le circuit magnétique fermé, c'est-à-dire N-S ou S-N pour une action attirante ou N-N et S-S pour une action repoussante.

6. Moteur magnétique selon les revendications 1 à 5, **caractérisé en ce que** les bobines magnétiques (1) ont une polarité périodique appropriée vers les aimants permanents (2). Les aimants permanents (2) se trouvent dans le sens de rotation devant les bobines magnétiques (1), de sorte que les bobines magnétiques sont en traction. Pendant la rotation, la polarité des bobines magnétiques passe d'un effet attirant à un effet repoussant au moment approprié et les aimants permanents sont dans le sens de rotation, même après le sommet supérieur.

7. Moteur magnétique selon les revendications 1 à 6, **caractérisé en ce que** la bobine magnétique (1) exerce un double effet. Après la commutation d'un effet de traction à un effet de pression, la bobine magnétique exerce une pression sur les aimants permanents (2) qui pivotent sur eux-mêmes, pendant qu'elle attire en même temps les aimants permanents suivants (2) avec une force croissante. Ce double effet repose sur l'agencement alterné de la polarité des aimants permanents.

8. Moteur magnétique selon les revendications 1 à 7, **caractérisé en ce qu'**en cas de plusieurs rotors (3), les bobines magnétiques (1) sont placées de manière décalée sur le support.

9. Moteur magnétique selon les revendications 1 à 8, **caractérisé en ce que** la commande de vitesse de rotation s'effectue en arrêtant les bobines magnétiques (1) individuellement.

10. Moteur magnétique selon les revendications 1 à 9, **caractérisé en ce que** l'énergie nécessaire aux bobines magnétiques (1) est fournie par une batterie.

11. Moteur magnétique selon les revendications 1 à 10, **caractérisé en ce que** l'énergie permettant d'augmenter la durée de fonctionnement peut être fournie par une batterie, des cellules solaires et un générateur.
